# FASCICULE DE BREVET EUROPEEN

(11) **EP 2 576 125 B1**
(45) Date de publication et mention de la délivrance du brevet: **26.03.2014**
(21) Numéro de dépôt: 11718401.0
(22) Date de dépôt: 09.05.2011
(51) Int. Cl.: B23K 26/20, B23K 26/06, H01S 3/109

(54) **Procédé et installation d'usinage laser pulsé, en particulier pour le soudage, avec variation de l apuissance de chaque impulsion laser**
Laserbearbeitungsverfahren und -anlage, insbesondere zum Schweißen, mit Änderung der Leistung für jede Pulse
Pulsed laser machining method and installation, in particular for welding, with variation of power wihtin each pulse

(30) Priorité: 03.06.2010 EP 10164824
(43) Date de publication de la demande: 10.04.2013
(73) Titulaire: Rofin-Lasag AG, 3602 Thun (CH)
(72) Inventeur: DÜRR, Ulrich, CH-3608 Allmendingen (CH); RUETTIMANN, Christoph, CH-3600 Thun (CH); FREI, Bruno, CH-3634 Thierachern (CH)
(74) Mandataire: Schlögl, Markus
(86) Numéro de dépôt international: PCT/EP2011/057441
(87) Numéro de publication internationale: WO 2011/151136

(56) Documents cités:
- EP-A1- 0 241 621
- JP-A- 10 202 380
- US-A- 5 083 007
- US-A1- 2007 036 184
- DATABASE WPI Week 200615 Thomson Scientific, London, GB; AN 2006-143638 XP002608649, -& RU 2 269 401 C2 (AVIATION REPAIR WKS) 10 février 2006 (2006-02-10)

## Description

La présente invention concerne le domaine de l'usinage laser et en particulier le soudage au laser de matériaux hautement réfléchissant, tels le cuivre, l'or, l'argent, l'aluminium ou un alliage comprenant un de ces métaux. Plus particulièrement, l'invention concerne un procédé d'usinage laser et une installation pour la mise en ouvre de ce procédé où la source de lumière cohérente génère un faisceau laser avec une longueur d'onde entre 700 et 1200 nanomètres, par exemple un laser Nd:YAG ou un laser à fibre. Un cristal non linéaire est prévu pour doubler partiellement la fréquence du faisceau laser de manière à augmenter l'efficacité d'usinage.

### Arrière-plan technologique

Il est connu du document de brevet US 5,083,007 sur lequel est basé le preambule des revendications 1 et 13, une installation de soudage au laser comprenant une source laser Nd:YAG, pompée optiquement par une lampe à décharge (flash) et générant une lumière cohérente avec une longueur d'onde de 1064 nanomètres (nm), et un cristal non linéaire (par exemple LiNbO₃ ou KTP) agencé dans la cavité résonnante, ce cristal doublant partiellement la fréquence de la lumière générée par la source laser. A la sortie de la cavité résonnante, on a donc un faisceau laser formé de deux longueurs d'onde, à savoir 1064 nm (lumière infrarouge) et 532 nm (lumière verte). Ce document propose de produire un faisceau laser pulsé avec au moins 3% de lumière ayant une longueur d'onde entre 350 et 600 nm engendrée par un convertisseur de fréquence 2F. De préférence les impulsions laser ont au moins une énergie de 30 mJ avec au moins 3 mJ provenant de la lumière à double fréquence. La durée des impulsions est prévue entre 0,5 milliseconde (ms) et 5,0 ms.

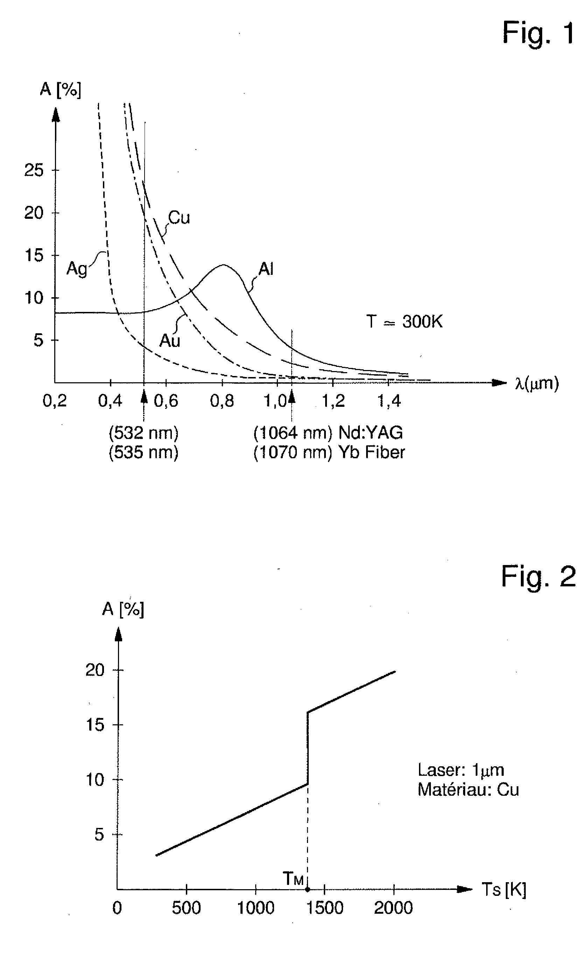

Le document US 5,083,007 divulgue essentiellement trois modes de réalisation pour l'installation de soudage laser. Dans le premier mode de réalisation (Figure 1), il est prévu de générer un faisceau laser de relativement faible puissance instantanée pour ne pas endommager le cristal non linéaire, de manière à obtenir avec le cristal agencé intra-cavité un pourcentage entre 5 % et 15% de lumière verte. Pour augmenter ce pourcentage de lumière verte, il est prévu optionnellement d'agencer un réflecteur infrarouge qui filtre une partie de la lumière infrarouge. Dans un deuxième mode de réalisation, il est prévu de sélectionner un miroir de sortie de la cavité résonante qui réfléchisse peu la lumière verte, ce qui permet d'augmenter la quantité de lumière verte dans les impulsions laser. On notera ici que le rapport entre lumière infrarouge et lumière verte est fixe. Dans le troisième mode de réalisation, pour pouvoir ajuster le rapport entre ces deux radiations dans le faisceau laser, il est prévu de séparer ces deux radiations puis de les atténuer indépendamment par des filtres. Ceci permet de varier le rapport entre les deux radiations en réduisant la puissance laser incidente sur le matériau pour une puissance émise donnée. On réduit donc l'efficacité du système laser. De plus, on remarquera que cette manière de procéder permet de varier le rapport entre lumière verte et lumière infrarouge entre deux opérations de soudage distinctes puisqu'il est nécessaire de changer au moins un filtre atténuateur pour modifier ce rapport.

Dans tous les modes de réalisation donnés dans le document US 5,083,007, il est prévu que les impulsions laser sont formées par commutation ON / OFF de la lampe flash. Il en résulte des impulsions comme représentées à la figure 2 de ce document, le profil de puissance présentant une augmentation exponentielle dès l'enclenchement des moyens de pompage (commutation ON) jusqu'à un niveau maximum conservé tant que les moyens de pompage reste actifs, c'est-à-dire sur tout le corps d'impulsion dont la durée est en relation avec la période de l'impulsion, puis la puissance descend de manière exponentielle dès que les moyens de pompage optique sont éteints (position OFF). On n'a donc aucune gestion ou contrôle du profil de puissance au cours de chaque impulsion. La puissance reste à son maximum sauf aux deux extrémités où le profil dépend seulement des caractéristiques physiques de la source laser et des moyens de pompage optique. Par conséquent, le rapport entre la lumière verte et la lumière infrarouge reste sensiblement constant sur la majeure partie de chaque impulsion. Ceci pose un problème en particulier pour les métaux hautement réfléchissant. En effet, le taux de conversion du cristal 2F augmente avec l'intensité du faisceau laser incident.

Le dispositif laser proposé dans le document US 5,083,007 fournit des impulsions par modulation de la puissance de pompage optique entre un niveau bas (OFF) et un niveau haut (ON). Pour augmenter la puissance de lumière verte dans des impulsions générées par un tel laser, il faut augmenter la puissance des moyens de pompage. En augmentant ainsi la proportion et la quantité de lumière verte dans les impulsions, on augmente également la quantité d'énergie infrarouge et dans tous les cas la quantité d'énergie globale par impulsion. On a observé que ceci pose un problème pour la qualité du soudage effectué car, si le couplage initial de la lumière verte dans la matière est meilleur, une fois que la température locale du matériau soudé augmente de manière significative, l'énergie infrarouge est aussi bien absorbée. Ceci conduit alors à une intensité d'énergie absorbée trop importante et à l'apparition d'effets thermiques secondaires néfastes, tels la formation de plasma et l'éjection de matière en fusion hors de la surface du matériau. Par contre, si on réduit la puissance du laser pulsé pour limiter la quantité de lumière infrarouge absorbée par impulsion, on diminue la proportion et la quantité d'énergie de lumière verte fournie et l'efficacité du soudage diminue. De plus, la reproductibilité d'un soudage donné devient très dépendante de l'état de surface du matériau soudé. Le contrôle de la qualité du soudage effectué devient complexe et difficile à assurer.

### Résumé de l'invention

A la Figure 1 est représenté approximativement le coefficient d'absorption sensiblement à température ambiante de quatre métaux hautement réfléchissant (Cuivre, or, argent et aluminium) en fonction de la longueur d'onde d'une lumière laser incidente sur chacun d'eux. On observe en particulier pour le cuivre (Cu), l'or (Au) et l'argent (Ag) un très faible taux d'absorption de la lumière pour la longueur d'onde de 1064 nm correspondant à la radiation générée par un laser Nd:YAG. Par contre, au double de la fréquence (c'est-à-dire à 532 nm), on observe que le taux d'absorption augmente grandement pour atteindre environ 20% (à température ambiante) pour le cuivre et l'or, ce taux pouvant monter jusqu'à environ 40% dès que la température augmente. Ceci explique pourquoi le faisceau mixte proposé dans l'art antérieur susmentionné permet d'augmenter l'efficacité d'un soudage. On notera toutefois que les pourcentages donnés ici sont indicatifs car ils dépendent encore d'autres paramètres comme l'état de surface du métal.

Cependant, pour la lumière infrarouge, la situation représentée à la Figure 1 varie considérablement lorsque la température de la surface du métal augmente et un saut important intervient lorsque cette température atteint la température de fusion, comme ceci est représenté approximativement à la Figure 2 pour le cuivre. On observe que l'on passe, pour une lumière infrarouge incidente provenant d'un laser Nd:YAG (1µm), d'un coefficient d'absorption inférieur à 5% à température ambiante à environ 10% en approchant de la température de fusion T_{M}. A cette température de fusion, ce coefficient devient supérieur à 15% et il continue d'augmenter ensuite avec une augmentation de la température du métal en fusion. Cette constatation donne une explication du problème observé dans l'art antérieur. En augmentant la puissance du dispositif laser pour avoir plus d'énergie couplée au métal dans la phase initiale du soudage, l'art antérieur augmente la puissance de lumière infrarouge sur toute la période de l'impulsion, laquelle est absorbée de plus en plus dès que la température de la surface du matériau augmente ; ce qui se produit de fait rapidement. L'efficacité initiale du soudage augmente, mais la quantité globale d'énergie finalement absorbée devient trop importante et engendre des problèmes secondaires néfastes à la qualité du soudage, notamment à l'état de surface après soudage.

La présente invention a pour objet de résoudre le problème mis en lumière ci-avant dans le cadre de la présente invention en équipant l'installation laser de moyens de commande agencés pour former des impulsions laser avec un profil de puissance sur la période de chaque impulsion laser présentant dans une sous-période initiale un pic de puissance maximale ou une partie d'impulsion avec une puissance maximale et dans une sous-période intermédiaire, de durée supérieure à la sous-période initiale et suivant directement cette dernière, une puissance inférieure à ladite puissance maximale sur toute cette sous-période intermédiaire. La puissance maximale a une valeur au moins deux fois plus élevée que la puissance moyenne sur la période de l'impulsion laser. De plus, la durée ou le temps de montée à la puissance maximale depuis le début de l'impulsion laser est prévue inférieure à 300 µs et de préférence inférieur à 100 µs. En particulier, la durée de la sous-période initiale est inférieure à deux millisecondes (2 ms) et de préférence inférieure à 1 ms. L'impulsion laser se termine de préférence par une sous-période terminale où la puissance diminue rapidement, de préférence de manière contrôlée pour optimiser le refroidissement d'une soudure.

L'invention concerne donc un procédé d'usinage laser tel que défini à la revendication 1 jointe à la présente description. Des caractéristiques particulières de ce procédé sont données aux revendications dépendantes de cette revendication 1. L'invention concerne également une installation d'usinage laser telle que définie à la revendication 13. Des caractéristiques particulières de cette installation et notamment de ses moyens de commande sont données aux revendications dépendantes de cette revendication 13.

Grâce aux caractéristiques de l'invention qui introduisent une gestion de la puissance lumineuse émise au cours de chaque impulsion laser et définissent un profil de puissance avec une relativement haute puissance dans une phase initiale de l'impulsion et une puissance réduite suite à cette phase initiale, on obtient une quantité significative de lumière à double fréquence (c'est-à-dire avec une fréquence doublée) dans la phase initiale et ensuite, lorsque l'absorption de la lumière à la fréquence initiale de la source laser a suffisamment augmentée suite à l'augmentation de la température de la surface du matériau usiné, la puissance de la lumière émise est diminuée de manière significative pour limiter la quantité d'énergie absorbée et de préférence contrôler temporellement, au cours de la phase intermédiaire de l'impulsion, la puissance lumineuse absorbée.

On notera que la gestion du profil de puissance de chaque impulsion laser est prévue dans la première phase spécifiquement de manière à optimiser la production de lumière à double fréquence (c'est-à-dire à une fréquence dont la valeur est doublée relativement à la fréquence simple / fréquence initiale), laquelle est mieux absorbée que la lumière à fréquence simple dans cette phase initiale où la température du matériau soudé est initialement inférieure à sa température de fusion. Ainsi, il est prévu de monter rapidement à la puissance maximale pour obtenir rapidement une puissance lumineuse à double fréquence qui soit suffisante pour chauffer rapidement le matériau soudé. Selon l'invention, la durée ou le temps de montée à la puissance maximale est prévu inférieur à 300 µs (0,3 ms) et de préférence inférieur à 100 µs (0,1 ms).

La puissance maximale du pic initial doit être suffisante pour coupler de manière optimale l'énergie de la lumière à double fréquence au matériau, mais pas trop élevée car avec un bon taux de conversion souhaitable, la quantité de lumière à double fréquence peut devenir importante et même prépondérante. Par contre, au cours de la phase suivante, on contrôle l'énergie transmise au matériau essentiellement par la lumière à fréquence simple pour effectuer le soudage. Dans cette phase ultérieure, la puissance est diminuée et la puissance convertie en lumière à double fréquence joue seulement un rôle secondaire, voire insignifiant. Le pic de puissance dans la phase initiale permet de générer une sorte d'impulsion initiale à double fréquence, laquelle est suivie par une impulsion à la fréquence simple. On a donc pour ainsi dire dans chaque impulsion laser engendrée la combinaison de deux impulsions successives dont la première a une fréquence double de celle de la seconde. Chacune de ces deux impulsions est adaptée à l'évolution de la température du matériau au cours du soudage et à son absorption par le matériau. Le pic initial sert donc à obtenir une impulsion initiale à double fréquence dont la puissance soit suffisante pour élever rapidement la température du matériau soudé, ce pic initial ayant selon l'invention une puissance au moins deux fois supérieure à la puissance moyenne de l'impulsion car le taux de conversion du cristal non linéaire est bien inférieure à 100% et de plus il est dépendant de l'intensité lumineuse que le cristal reçoit.

En limitant la durée de haute puissance à la seule phase initiale, on contrôle donc différemment la puissance dans la phase initiale où la lumière à double fréquence est majoritairement absorbée et dans la phase intermédiaire durant laquelle le soudage proprement a lieu et où la lumière à la longueur d'onde initiale est bien absorbée. De plus, ceci permet de fournir une puissance relativement élevée dans la phase initiale pour augmenter le taux de conversion par le cristal non linéaire. En effet, ce taux de conversion augmente proportionnellement à l'intensité lumineuse incidente, ce qui a pour conséquence que la puissance lumineuse à double fréquence augmente proportionnellement au carré de la puissance incidente. Ainsi, il est avantageux pour obtenir un maximum de lumière à double fréquence dans la phase initiale de prévoir une puissance lumineuse relativement élevée dans cette phase initiale. Comme la puissance émise dans cette phase initiale ne définit pas la puissance émise dans la phase ultérieure, ceci ne pose plus de problème pour la qualité d'usinage. On peut ainsi prévoir dans cette phase initiale un pic de puissance relativement élevé qui engendre une amorce d'usinage rapide et efficace à la surface du matériau usiné. Ceci présente un autre avantage puisqu'il n'est pas nécessaire, comme dans l'art antérieur, d'incorporer le cristal non linéaire dans la cavité laser pour obtenir une certaine proportion de lumière à double fréquence. On peut donc prendre une source laser classique et agencer sur l'axe optique du faisceau laser sortant de la source laser une unité thermo-régulée comprenant le cristal non linéaire.

### Brève description des dessins

D'autres caractéristiques particulières de l'invention seront décrites ci-après en référence aux dessins annexés, donnés à titre d'exemples nullement limitatifs, dans lesquels :
- La Figure 1, déjà décrite, montre la dépendance de l'absorption lumineuse en fonction de la longueur d'onde pour divers métaux à la température ambiante ;
- La Figure 2, déjà décrite, montre la dépendance de l'absorption lumineuse du cuivre en fonction de la température de ce métal ;
- La Figure 3 montre schématiquement un profil de puissance d'une impulsion laser selon l'invention avec les composantes aux deux longueurs d'onde présentes suite au passage au travers d'un cristal non linéaire ;
- La Figure 4 représente un mode de mise en oeuvre préféré du procédé d'usinage laser selon l'invention ;
- La Figure 5 représente schématiquement un premier mode de réalisation d'une installation d'usinage laser selon l'invention ; et
- La Figure 6 représente schématiquement un deuxième mode de réalisation d'une installation d'usinage laser selon l'invention.

### Description détaillée de l'invention

Le procédé d'usinage laser selon l'invention comprend les étapes suivantes :
A) Génération au moyen d'une source laser d'un faisceau laser ayant une longueur d'onde entre 700 et 1200 nanomètres et formé d'une succession d'impulsions laser ;
B) Doublement de la fréquence d'une partie du faisceau laser au moyen d'un cristal non linéaire ;
C) Variation de la puissance au cours de chaque impulsion laser émise de manière que le profil de puissance sur la période de cette impulsion laser présente, dans une sous-période initiale T1, un pic de puissance maximale ou une partie d'impulsion avec une puissance maximale et, dans une sous-période intermédiaire T2 de durée supérieure à la sous-période initiale et suivant cette dernière, une puissance inférieure à ladite puissance maximale sur toute cette sous-période intermédiaire.

La variation de la puissance maximale a une valeur au moins deux fois plus élevée que la puissance moyenne sur la période de l'impulsion laser et le temps de montée à ladite puissance maximale depuis le début de chaque impulsion laser est inférieur à 3/10 millisecondes (0,3 ms).

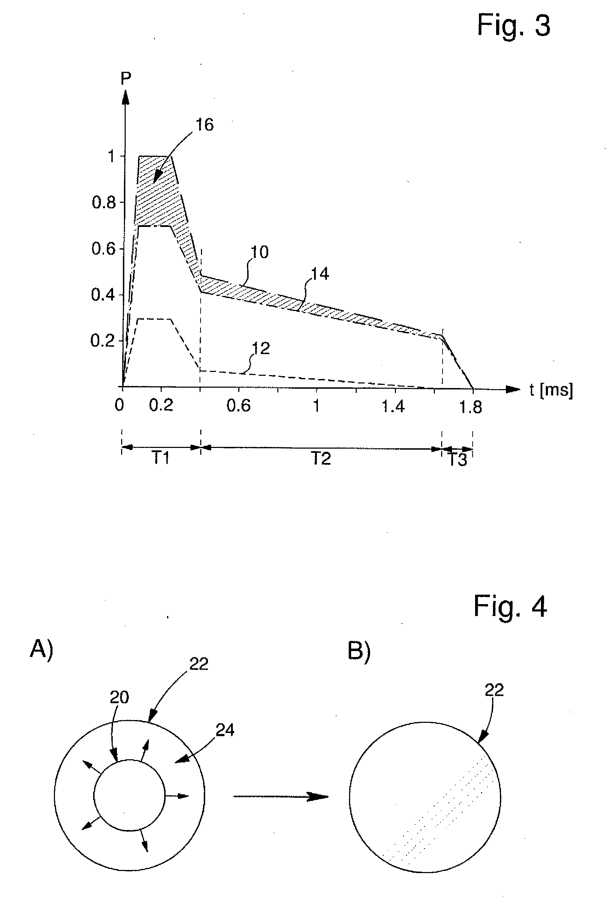

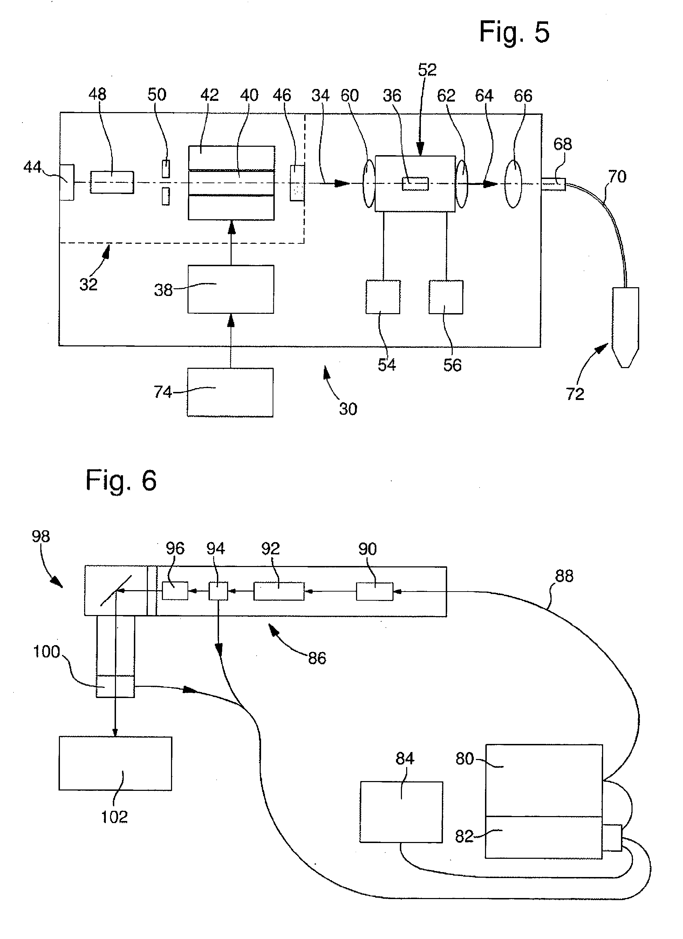

A la Figure 3 est représentée une variante du profil de puissance normalisée (échelle relative avec le maximum à 1) des impulsions laser selon la présente invention. La courbe 10 correspond à la puissance laser totale émise durant une impulsion. Après le passage au travers du cristal non linéaire prévu, une partie de la lumière à la fréquence initiale de la source laser est convertie en lumière à double fréquence. La courbe de puissance résultante pour cette lumière ou radiation à double fréquence est représentée schématiquement et approximativement par la courbe 12. La puissance de lumière initiale restante est donnée par la courbe 14. La surface hachurée 16 représente donc la partie de la lumière laser générée dont la fréquence a été doublée. On remarquera que la puissance lumineuse de la lumière à double fréquence est proportionnelle au carré (puissance mathématique 2) de la puissance lumineuse initiale. En effet, pour une puissance initiale normalisée de '1', on obtient une puissance lumineuse à double fréquence par exemple de 0,3 (30%) alors que lorsque la puissance initiale est diminuée par deux à 0,5 (50%), la puissance lumineuse à double fréquence est réduite par quatre à environ 0,075 (7,5%). On notera qu'un taux de conversion de 30% correspond pratiquement à un maximum pour un laser industriel standard, pompé à lampe flash et/ou à diodes avec une puissance de crête inférieure à 10 kW et des impulsions de pompage de quelques millisecondes, lorsqu'un tel laser est associé à une unité de doublement de la fréquence externe au résonateur (cas des Figures 5 et 6 qui seront décrites par la suite). On remarquera cependant qu'il est possible d'obtenir des taux de conversion supérieurs avec des lasers à fibre optique fournissant un faisceau laser de très bonne qualité (M² proche de 1.0).

Dans la phase initiale, la source laser est commandée de manière à atteindre rapidement la puissance maximale prévue, pour obtenir dans un court délai une puissance lumineuse à double fréquence optimale. De manière générale, la durée de montée à la puissance maximale est prévue inférieure à 3/10 ms (0,3 ms). Dans une variante préférée il est prévu d'augmenter la puissance au plus vite au début de l'impulsion laser, pour obtenir aussi vite que possible un maximum de lumière à fréquence double. La durée de montée à la puissance maximale est alors inférieure à 0,1 ms. Dans une variante particulière, cette durée de montée est prévue inférieure à 50 µs (0,05 ms).

L'impulsion laser se termine par une sous-période terminale T3 de décroissance de la puissance vers zéro avec de préférence un contrôle de cette décroissance pour influencer le refroidissement d'une soudure effectuée et optimiser la métallurgie.

Pour bien comprendre le mécanisme physique obtenu par des impulsions laser avec un profil de puissance selon l'invention, on peut considérer une variante de la Figure 3 dans une application de soudage laser d'éléments en cuivre avec une lumière infrarouge (1064 ou 1070 nm). Dans la sous-période initiale T1 où la puissance est maximale, on peut considérer par exemple que 20% de lumière infrarouge est convertie en lumière verte (532 ou 535 nm). Il reste donc 80% de lumière infrarouge incidente sur la surface du métal. Cependant, 20-40% de l'énergie de la lumière verte est absorbée alors que seulement 5-10 % de l'énergie infrarouge est absorbée. On obtient donc un couplage de la lumière verte dans le métal correspondant à 4-8% de l'énergie totale, ce qui correspond également à la proportion de lumière infrarouge couplée au métal. Ainsi, dans la sous-période initiale, la lumière verte contribue autant que la lumière infrarouge à la fusion du métal alors que la conversion effectuée par le cristal non linéaire est de seulement 20%. On remarquera qu'au début de la sous-période initiale, alors que la température du métal n'a pas encore été élevée de manière significative par l'apport d'énergie, la quantité d'énergie à la fréquence initiale qui est absorbée par le métal est en général inférieure à celle à la fréquence double qui joue alors un rôle majeur. Une fois que la température du métal augmente suffisamment, le rapport entre les deux énergies couplées varie et la quantité d'énergie infrarouge absorbée devient prépondérante. Dès que la quantité d'énergie infrarouge absorbée augmente fortement, la puissance lumineuse est réduite ; ce qui définit la sous-période intermédiaire T2 de chaque impulsion laser selon l'invention.

Dans le cadre de l'invention, les impulsions laser sont obtenues soit par un laser pompé par une lampe flash, soit par un laser pompé par diodes fonctionnant dans une première variante dans un mode cw modulé et dans une seconde variante dans un mode qcw (de l'anglais 'quasi continuous wave'). Si le laser est par exemple un laser à corps solide du type Nd:YAG ou similaire, les moyens de pompage sont formés, dans une première variante, par une lampe flash et, dans une autre variante, par des diodes. Dans un mode préféré, il est prévu d'utiliser un laser à fibre pompé par diodes. Ce dernier permet d'obtenir un faisceau de meilleure qualité pouvant être mieux focalisé ; ce qui peut permettre d'augmenter le taux de conversion du cristal non linéaire. Dans la sous-période initiale T1, la puissance maximale peut varier notamment entre 50 W (Watt) et 20 kW. Ceci dépend notamment du diamètre prévu pour la tache laser au niveau de la surface du matériau usiné.

La période des impulsions laser n'est pas limitée, mais se situe généralement entre 0,1 ms et 100 ms (millisecondes). Dans une variante préférée, en particulier pour une application de soudage, la durée de la sous-période initiale T1 est inférieure à 2 ms. Une durée typique pour la sous-période intermédiaire T2 se situe dans la plage de 1 ms à 5 ms avec la condition selon l'invention que T2 soit supérieure à T1.

Dans un mode de mise en oeuvre préféré du procédé selon l'invention, la puissance maximale du profil temporel de l'impulsion laser a une valeur au moins deux fois plus élevée que la puissance moyenne sur la période de cette impulsion laser. Dans une variante particulière, la puissance maximale est supérieure à 200 W. Dans ce dernier cas, la source laser fonctionne dans un mode qcw ou pulsé par une lampe flash ou par diodes. Dans le mode cw modulé, la puissance maximale dans la phase T1 correspond à la puissance cw maximale et la puissance cw est ensuite réduite dans la phase suivante T2.

Les applications envisagées pour le procédé de l'invention sont multiples, en particulier le soudage en continu ou par point de métaux, le découpage et la gravure de métaux et de matériaux durs comme la céramique, du CBN ou du PKD.

Dans un mode particulier, Il est prévu des moyens de focalisation du faisceau laser qui ne sont pas ou pas totalement compensés chromatiquement, de manière à obtenir au niveau du point focal une tache lumineuse pour la lumière à double fréquence avec un diamètre inférieur à celui de la tache lumineuse pour la lumière à la longueur d'onde initiale. Ainsi, selon ce mode particulier de l'invention, on tire profit du fait que la divergence de la lumière à double fréquence est différente de celle de la lumière à la fréquence simple, environ d'un facteur deux. Comme représenté à la Figure 4A, la tache de lumière formée par le faisceau incident sur le matériau usiné présente dans la zone centrale 20 un mixte des deux radiations alors que la zone annulaire 24 ne reçoit que la lumière à la fréquence simple dont la tâche lumineuse 22 présente un diamètre supérieur à celui de la tache lumineuse à double fréquence définissant la zone centrale 20. Grâce à cette caractéristique, l'absorption d'énergie dans une phase initiale d'une impulsion laser se fait essentiellement dans la zone centrale 20 où l'usinage est amorcé de manière efficace puisque la lumière à double fréquence est concentrée dans cette zone centrale et que son intensité est donc bien supérieure à celle qui résulterait du cas où cette lumière à double fréquence couvrirait sensiblement l'entier de la tache lumineuse 22. Ce mode particulier est spécialement intéressant dans une application de soudage d'éléments métalliques.

Par la suite de cette description du procédé selon l'invention, on considérera un soudage d'un métal hautement réfléchissant. En particulier, le métal soudé est du cuivre, de l'or, de l'argent, de l'aluminium ou un alliage contenant un de ces métaux.

Comme mentionné ci-avant, le mode particulier du procédé de l'invention décrit à l'aide de la Figure 4 s'applique efficacement à un soudage. La lumière à double fréquence est concentrée dans la zone centrale 20. Comme cette lumière est relativement bien absorbée par le métal, une certaine énergie est introduite dans ce métal dans la zone centrale et augmente localement sa température jusqu'à la température de fusion. A cet effet, l'intensité de lumière à double fréquence en combinaison avec la lumière à fréquence initiale dans le pic de puissance ou la partie d'impulsion avec une puissance maximale de chaque impulsion laser est supérieure au seuil de fusion pour cette combinaison de lumière et pour le matériau soudé. On notera que la fusion du métal dépend en premier lieu de l'intensité lumineuse, c'est-à-dire la densité de puissance, et aussi de la durée de cette intensité lumineuse. Ainsi, on comprend que la concentration de la lumière à double fréquence (lumière verte) dans le cas d'un laser à corps solide (par exemple Nd:YAG) ou d'un laser à fibre (par exemple dopée Yb) dans une zone centrale permet d'atteindre le seuil de fusion avec un laser de moindre puissance, non seulement à cause du doublement de la fréquence de la lumière infrarouge (pour les deux lasers donnés ici en exemple), mais également par le fait que cette lumière verte est concentrée dans une tache lumineuse environ quatre fois plus petite que la tache lumineuse obtenue pour la lumière infrarouge. On obtient donc une intensité lumineuse multipliée par quatre environ.

En se basant sur les caractéristiques d'absorption de la lumière par des métaux hautement réfléchissant données à la Figure 1, on comprend que l'énergie est absorbée initialement dans la zone centrale 20 où le métal commence après un certain délai à fondre (schématisée par le hachurage à la Figure 4A). L'énergie diffuse rapidement dans la région environnante (pour le cuivre, la diffusion de chaleur est d'environ 0,3 mm / 1 ms, ce qui est représenté par les flèches à cette Figure 4A. La température augmente alors dans la zone annulaire 24 et finalement la lumière à fréquence simple (infrarouge) est également absorbée de manière significative sur toute la tache lumineuse 22, ce qui conduit à une fusion du métal dans la zone de sa surface définie par cette tache lumineuse 22, comme représenté à la Figure 4B. Le soudage est donc opéré depuis la zone centrale du faisceau laser incident sur la surface du métal à souder. On notera que, selon la durée de l'impulsion laser et l'intensité lumineuse de la lumière infrarouge dans la sous-période terminale T2, la zone finale dans laquelle le métal a fondu est plus ou moins étendue et plus grande que la tache lumineuse 22 puisque le métal est bon conducteur de chaleur.

On notera également que la puissance du laser peut être commandée et notamment variée dans la sous-période intermédiaire pour optimiser le soudage. En particulier, il est prévu de commander la puissance lumineuse pour maintenir sensiblement constante la température de la matière fondue dans la zone de soudage au moins dans une première partie de cette sous-période intermédiaire. Le profil de puissance dans la sous-période intermédiaire peut être contrôlé en temps réel via un capteur ou déterminé de manière empirique, notamment par des essais préliminaires. Diverses manières de procéder sont à disposition de l'homme du métier.

Dans une variante particulière, l'intensité de lumière à double fréquence dans la sous-période initiale T1 est prévue supérieure à 0,1 MW/cm² au point focal situé sensiblement au niveau du soudage prévu. De préférence, la puissance maximale de l'impulsion lumineuse pour un laser donné est prévue au plus haut possible, tout en évitant cependant un perçage dans le cas d'une application de soudage. Dans cette variante préférée, l'intensité de lumière à double fréquence dans la sous-période initiale T1 présente un pic de puissance supérieur à 1,0 MW/cm² au point focal.

Dans une variante optimisant la puissance du dispositif laser pour un soudage donné, l'intensité de lumière à la longueur d'onde initiale (lumière infrarouge) dans le pic de puissance ou la partie d'impulsion à puissance maximale est inférieure au seuil de fusion pour cette lumière à température ambiante pour le métal soudé. En particulier, il est prévu que l'intensité de lumière à la longueur d'onde initiale soit inférieure à 10 MW/cm² au point focal.

On décrira ci-après, de manière nullement limitative, deux modes de réalisation d'une installation laser selon l'invention.

A la Figure 5, l'installation d'usinage laser 30 comprend :
- une source de lumière cohérente 32 générant un faisceau laser 34 avec une longueur d'onde initiale entre 700 et 1200 nm;
- un cristal non linéaire 36 pour doubler partiellement la fréquence du faisceau laser ;
- des moyens de commande 38 de ladite source de lumière agencés pour engendrer des impulsions laser ;

Cette installation est caractérisé par le fait que les moyens de commande 38 sont agencés pour former des impulsions laser avec un profil de puissance sur la période de chaque impulsion laser présentant, dans une sous-période initiale, un pic de puissance maximale ou une partie d'impulsion avec une puissance maximale et, dans une sous-période intermédiaire de durée supérieure à la sous-période initiale et suivant directement cette dernière, une puissance inférieure à ladite puissance maximale sur toute cette sous-période intermédiaire (voir Figure 3 décrite précédemment). La puissance maximale est prévue au moins deux fois plus élevée que la puissance moyenne sur la période de l'impulsion laser et le temps de montée à ladite puissance maximale depuis le début de chaque impulsion laser est prévu inférieur à 300 µs (0,3 ms).

La source de lumière cohérente (source laser) est formée d'un milieu actif 40 pompés optiquement par des moyens de pompage 42. Dans une première variante ces moyens de pompage sont formés par une ou plusieurs lampe(s) flash. Dans une seconde variante, les moyens de pompage sont formés par une pluralité de diodes. La source laser comprend une cavité résonnante formées par un miroir 44 totalement réfléchissant et un miroir de sortie 46 qui est semi-réfléchissant à la longueur d'onde émise sélectionnée (notamment 1064 nm pour un Nd:YAG). Il est également prévu un polarisateur 48 et un diaphragme 50 dans la cavité résonnante.

Le cristal non linéaire 36 est sélectionné pour doubler efficacement la fréquence du faisceau laser 34. Ce cristal est agencé dans un boîtier 52 étanche à la poussière. Ce boîtier est de préférence thermo-régulé, notamment à l'aide d'un module Peltier 54, et on effectue un certain vide d'air dans ce boîtier au moyen d'une pompe 56. A l'entrée du boîtier est prévue une optique de focalisation 60 pour augmenter l'intensité lumineuse au niveau du cristal doubleur de fréquence 36 puisque son efficacité est dépendant de l'intensité lumineuse incidente. Une optique 62, transparente pour 532 nm et 1064 nm, est également prévue pour collimater le faisceau laser 64 comprenant un mixte de deux radiations à la fréquence initiale (fréquence simple) et à la fréquence double. Ce faisceau 64 est ensuite introduit dans une fibre optique 70 au moyen d'une optique de focalisation 66 et d'un connecteur 68. La fibre optique 70 conduit le faisceau de lumière 64 jusqu'à une tête d'usinage 72.

Les moyens de commande 38 agissent sur les moyens de pompage 42. Ils sont associés à l'alimentation électrique de ces moyens de pompage et peuvent former ensemble une seule unité fonctionnelle ou un même module. Ces moyens de commande sont reliés à une unité de commande 74 agencée pour permettre à un utilisateur d'introduire certaines valeurs sélectionnées pour des paramètres ajustables de manière à définir le profil de puissance des impulsions laser engendrées par la source laser 32, de manière à mettre en oeuvre le procédé d'usinage laser selon la présente invention décrit précédemment. L'unité de commande 74 peut être assemblée à l'installation laser ou former une unité externe, tel un ordinateur. En particulier, les moyens de commande 38 sont agencés pour permettre de former des impulsions laser avec une sous-période initiale dans laquelle intervient la puissance maximale de l'impulsion, une sous-période intermédiaire d'une durée supérieure et une sous-période terminale de décroissance vers zéro de la puissance émise. La durée de la sous-période initiale est dans une variante préférée inférieure à deux millisecondes (2 ms). Ensuite, ces moyens de commande sont agencés pour obtenir un temps de montée à la puissance maximale qui soit relativement court et en tous cas inférieur à 300 µs.

Dans un premier mode de réalisation, la source laser est agencée pour fonctionner dans un mode qcw (pompage à diodes spécifiques), de manière à obtenir un pic de puissance relativement élevé dans la sous-période initiale, bien au-dessus de la puissance moyenne du laser, et des impulsions relativement longues. Dans un deuxième mode de réalisation, la source laser fonctionne dans un mode cw modulé avec un pompage par diodes. Dans un troisième mode de réalisation, la source laser est pompée par lampe flash, c'est-à-dire fonctionne en mode pulsé.

Selon un mode de réalisation particulier, notamment pour une application de soudage, l'installation d'usinage laser comprend, en aval du cristal non linéaire 36, des éléments optiques de focalisation du faisceau laser qui ne sont pas ou pas totalement compensés chromatiquement, de manière à obtenir au niveau du point focal une tache lumineuse pour la lumière à double fréquence qui présente un diamètre inférieur à celui de la tache lumineuse pour la lumière à la longueur d'onde initiale (voir Figure 4A décrite précédemment).

L'installation 30 forme notamment une installation de soudage de métaux hautement réfléchissant, par exemple du cuivre ou de l'or. Dans une telle application, cette installation 30 est agencée pour obtenir une intensité de lumière à double fréquence supérieure à 0,1 MW/cm² au point focal. De préférence, l'intensité de lumière à double fréquence dans la sous-période initiale T1 présente un pic de puissance supérieur à 1,0 MW/cm² au point focal. De manière à limiter la puissance de la source laser, il est prévu dans une variante avantageuse que l'intensité lumineuse à la longueur d'onde initiale est inférieure à 10 MW/cm² au point focal.

On remarquera que dans un autre mode de réalisation non représenté dans les figures, le cristal non linéaire peut être incorporé dans la cavité raisonnante de la source laser. Toutefois, cet agencement n'est pas préféré car il nécessite la construction de source laser spécifique à la présente invention, alors que le montage du cristal non linéaire hors cavité raisonnante, à la suite de la source laser, permet de prendre une source laser standard et disponible sur le marché. Ceci est un avantage économique important.

A la Figure 6 est représenté schématiquement un deuxième mode de réalisation d'une installation laser selon l'invention. Premièrement, la lumière cohérente est générée par un laser à fibre 80 pompé optiquement par diodes. De préférence, il fonctionne en mode qcw. Ce laser 80 est associé à des moyens de commande 82 agencés pour former des impulsions laser selon la présente invention (voir Figure 3 décrite précédemment). Ces moyens de commande définissent des moyens de formation d'impulsions laser présentant un profil de puissance spécifique. Ils sont reliés à une unité de commande 84 ayant une interface utilisateur. Les impulsions laser à la fréquence initiale sont envoyées via un câble optique 88 à une unité de traitement 86 du faisceau laser formé de ces impulsions, laquelle est assemblée directement avec la tête d'usinage 98. Cette unité de traitement 86 comprend un collimateur 90 pour sensiblement collimater le faisceau laser ou le focaliser sur le cristal non linéaire incorporé dans l'unité 92 de doublement de la fréquence d'une partie de la lumière laser initiale. Cette unité 92 peut comprendre une optique spécifique pour optimiser l'efficacité de la conversion en lumière à double fréquence (lumière verte dans le cas d'un laser à fibre dopée Yb, lequel émet une lumière laser avec une longueur d'onde de 1070 nm).

Dans une variante, il est prévu, en aval de l'unité doubleur de fréquence, un capteur de mesure 94 des puissances respectives pour la lumière à la fréquence initiale et/ou pour la lumière à fréquence double. Ensuite, de manière optionnelle, il est prévu un dispositif zoom 96 pour agrandir la section transversale du faisceau avant que celui-ci ne pénètre dans la tête d'usinage 98. Cette tête d'usinage est équipée d'un ou plusieurs capteurs 100, par exemple pour mesurer la température de la surface du matériau usiné 102 dans la zone d'impact du faisceau laser ou pour mesurer la lumière réfléchie par cette surface. Les capteurs 94 et 100 sont reliés aux moyens de commande 82 pour permettre de varier le profil de puissance des impulsions laser en temps réel en fonction des mesures effectuées.

## Revendications

1. Procédé d'usinage laser comprenant les étapes suivantes :
A) Génération au moyen d'une source laser (30 ;80,82) d'un faisceau laser ayant une longueur d'onde initiale entre 700 nm et 1200 nm et formé d'une succession d'impulsions laser (10) ;
B) Doublement de la fréquence d'une partie (12) dudit faisceau laser au moyen d'un cristal non linéaire ;
**caractérisé par** une étape de
C) Variation de la puissance lumineuse émise au cours de chaque impulsion laser de manière que le profil de puissance à ladite longueur d'onde initiale sur la période de cette impulsion laser présente, dans une sous-période initiale (T1), un pic de puissance maximale ou une partie d'impulsion avec une puissance maximale et, dans une sous-période intermédiaire (T2) de durée supérieure à la sous-période initiale et suivant cette dernière, une puissance inférieure à ladite puissance maximale sur toute cette sous-période intermédiaire, cette puissance maximale ayant une valeur au moins deux fois plus élevée que la puissance moyenne sur la période de l'impulsion laser et le temps de montée à ladite puissance maximale depuis le début de chaque impulsion laser étant inférieur à 0,3 millisecondes (300 µs).

2. Procédé d'usinage laser selon la revendication 1, **caractérisé en ce que** la durée de ladite sous-période initiale (T1) est inférieure à 2 ms.

3. Procédé d'usinage laser selon la revendication 1 ou 2, **caractérisé en ce que** ladite variation de la puissance de chaque impulsion laser est effectuée de manière que ledit temps de montée à ladite puissance maximale est inférieur à 0,05 ms (50 µs).

4. Procédé d'usinage laser selon l'une des revendications précédentes, **caractérisé en ce que** ladite puissance maximale est supérieure à 200 W, ladite source laser fonctionnant dans un mode qcw.

5. Procédé d'usinage laser selon l'une des revendications précédentes, **caractérisé en ce qu'**il est prévu des moyens de focalisation dudit faisceau laser qui ne sont pas ou pas totalement compensés chromatiquement, de manière à obtenir au niveau du point focal une tache lumineuse (20) pour la lumière à double fréquence qui présente un diamètre inférieur à celui de la tache lumineuse (22) pour la lumière à la longueur d'onde initiale.

6. Procédé d'usinage laser selon l'une des revendications précédentes, **caractérisé en ce que** ce procédé consiste en un soudage d'un métal hautement réfléchissant.

7. Procédé d'usinage laser selon la revendication 6, **caractérisé en ce que** l'intensité de lumière à double fréquence en combinaison avec la lumière à fréquence initiale dans le pic de puissance ou la partie d'impulsion avec la puissance maximale est supérieure au seuil de fusion, dans la sous-période initiale, pour cette combinaison de lumière et pour le matériau soudé.

8. Procédé d'usinage laser selon la revendication 7, **caractérisé en ce que** ladite intensité de lumière à double fréquence est supérieure à 0,1 MW/cm² au point focal.

9. Procédé d'usinage laser selon la revendication 7 ou 8, **caractérisé en ce que** l'intensité de lumière à la longueur d'onde initiale dans le pic de puissance ou la partie d'impulsion avec la puissance maximale est inférieure, dans la sous-période initiale, au seuil de fusion pour cette lumière et pour le métal soudé.

10. Procédé d'usinage laser selon la revendication 9, **caractérisé en ce que** ladite intensité de lumière à la longueur d'onde initiale est inférieure à 10 MW/cm2 au point focal.

11. Procédé d'usinage laser selon l'une des revendications 6 à 10, **caractérisé en ce que** ledit métal soudé est du cuivre, de l'or, de l'argent, de l'aluminium ou un alliage contenant un de ces métaux.

12. Procédé d'usinage laser selon l'une des revendications 6 à 11, **caractérisé en ce que** lesdites impulsions laser présentent une sous-période terminale (T3) dans laquelle la puissance décroît vers zéro de manière à optimiser le refroidissement de la soudure effectuée.

13. Installation d'usinage laser comprenant :
- une source de lumière cohérente (32;80) générant un faisceau laser (34) avec une longueur d'onde initiale entre 700 nm et 1200 nm ;
- un cristal non linéaire (36;92) pour doubler partiellement la fréquence dudit faisceau laser ;
- des moyens de commande (38;82) de ladite source de lumière agencés pour engendrer des impulsions laser (10) ;
**caractérisé en ce que** lesdits moyens de commande sont agencés pour former lesdites impulsions laser avec un profil de puissance sur la période de chaque impulsion laser présentant, dans une sous-période initiale (T1), un pic de puissance maximale ou une partie d'impulsion avec une puissance maximale et, dans une sous-période intermédiaire (T2) de durée supérieure à la sous-période initiale et suivant directement cette dernière, une puissance inférieure à ladite puissance maximale sur toute cette sous-période intermédiaire, **en ce que** ces moyens de commande sont agencés de manière que ladite puissance maximale ait une valeur au moins deux fois plus élevée que la puissance moyenne sur la période de l'impulsion laser et que le temps de montée à ladite puissance maximale depuis le début de chaque impulsion laser soit inférieur à 0,3 millisecondes (300 µs).

14. Installation d'usinage laser selon la revendication 13, **caractérisée en ce que** ladite source de lumière cohérente est pompée par diodes et fonctionne dans un mode qcw.

15. Installation d'usinage laser selon la revendication 13 ou 14, **caractérisée en ce que** ladite source de lumière cohérente est formée par un laser à fibre (80).

16. Installation d'usinage laser selon l'une des revendications 13 à 15, **caractérisée en ce que** la durée de ladite sous-période initiale (T1) est inférieure à deux millisecondes (2 ms).

17. Installation d'usinage laser selon l'une des revendications 13 à 16, **caractérisé en ce que** ledit temps de montée est inférieur à 50 µs (0,05 ms).

18. Installation d'usinage laser selon l'une des revendications 13 à 17, **caractérisée en ce qu'**elle comprend des éléments optiques de focalisation dudit faisceau laser qui ne sont pas ou pas totalement compensés chromatiquement, de manière à obtenir au niveau du point focal une tache lumineuse (20) pour la lumière à double fréquence qui présente un diamètre inférieur à celui de la tache lumineuse (22) pour la lumière à la longueur d'onde initiale.

19. Installation d'usinage laser selon l'une des revendications 13 à 18, **caractérisée en ce qu'**elle définit une installation de soudage de métaux hautement réfléchissant.

20. Installation d'usinage laser selon la revendication 19, **caractérisée en ce que** l'intensité de lumière à double fréquence est supérieure à 0,1 MW/cm² au point focal.

21. Installation d'usinage laser selon la revendication 19 ou 20, **caractérisée en ce que** l'intensité de lumière à la longueur d'onde initiale est inférieure à 10 MW/cm² au point focal.

22. Installation d'usinage laser selon l'une des revendications 19 à 21, **caractérisée en ce que** lesdits moyens de commande sont agencés pour former lesdites impulsions laser avec un profil de puissance présentant une sous-période terminale (T3) durant laquelle la puissance décroît vers zéro de manière à assurer un refroidissement optimal de la soudure effectuée.

23. Installation d'usinage laser selon l'une des revendications 13 à 22, **caractérisée en ce qu'**elle comprend un capteur (94) de mesure de la puissance lumineuse à double fréquence, ce capteur étant relié auxdits moyens de commande pour varier en temps réel le profil desdites impulsions laser en fonction de la mesure de cette puissance lumineuse à double fréquence.

24. Installation d'usinage laser selon l'une des revendications 13 à 23, **caractérisée en ce qu'**elle comprend un capteur (100) pour mesurer la température de la surface du matériau usiné dans la zone d'impact du faisceau laser ou pour mesurer la lumière réfléchie par cette surface, ce capteur étant relié auxdits moyens de commande pour varier en temps réel le profil desdites impulsions laser en fonction de la mesure de cette température ou de cette lumière réfléchie.

25. Installation d'usinage laser selon l'une des revendications 13 à 24, **caractérisée en ce que** lesdits moyens de commande sont agencés de manière que ledit temps de montée à ladite puissance maximale est sensiblement inférieur à 0,1 ms (100 µs).

26. Installation d'usinage laser selon la revendication 19, **caractérisée en ce que** l'intensité de lumière à double fréquence est supérieure à 1,0 MW/cm² au point focal.

27. Procédé d'usinage laser selon l'une quelconque des revendications 1 à 12, **caractérisé en ce que** ladite variation de la puissance de chaque impulsion laser est effectuée de manière que ledit temps de montée à ladite puissance maximale est sensiblement inférieur à 0,1 ms (100 µs).

28. Procédé d'usinage laser selon la revendication 7, **caractérisé en ce que** ladite intensité de lumière à double fréquence est supérieure à 1,0 MW/cm² au point focal.

## Patentansprüche

1. Laserbearbeitungsverfahren, umfassend die folgenden Schritte:
A) Mittels einer Laserquelle (30; 80, 82) erfolgendes Erzeugen eines Laserbündels, das eine anfängliche Wellenlänge zwischen 700 nm und 1200 nm aufweist und durch eine Aufeinanderfolge von Laserimpulsen (10) gebildet wird;
B) Verdoppeln der Frequenz von einem Teil (12) des Laserbündels mit Hilfe eines nichtlinearen Kristalls;
**gekennzeichnet durch** einen Schritt des
C) Variierens der Leuchtkraft, die im Lauf jedes Laserimpulses ausgesendet wird, so dass das Leistungsprofil bei der anfänglichen Wellenlänge über die Periode dieses Laserimpulses hinweg in einer anfänglichen Unterperiode (T1) eine Spitze mit maximaler Leistung oder einen Impulsteil mit einer maximalen Leistung aufweist und in einer mittleren Unterperiode (T2), deren Dauer höher ist als jene der anfänglichen Unterperiode und die auf die Letztgenannte folgt, eine Leistung aufweist, die über diese gesamte mittlere Unterperiode hinweg geringer ist als die maximale Leistung, wobei diese maximale Leistung einen Wert aufweist, der wenigstens zwei Mal höher ist als die über die Laserimpulsperiode hinweg gemessene durchschnittliche Leistung, und wobei die Zeit des Anstiegs bis zur maximalen Leistung ab dem Beginn jedes Laserimpulses weniger als 0,3 Millisekunden (300 µs) beträgt.

2. Laserbearbeitungsverfahren nach Anspruch 1, **dadurch gekennzeichnet, dass** die Dauer der anfänglichen Unterperiode (T1) weniger als 2 ms beträgt.

3. Laserbearbeitungsverfahren nach Anspruch 1 oder 2, **dadurch gekennzeichnet, dass** die Variation der Leistung jedes Laserimpulses derart ausgeführt wird, dass die Zeit des Anstiegs bis zur maximalen Leistung weniger als 0,05 ms (50 µs) beträgt.

4. Laserbearbeitungsverfahren nach einem der vorhergehenden Ansprüche, **dadurch gekennzeichnet, dass** die maximale Leistung über 200 W beträgt, wobei die Laserquelle in einem qcw-Modus betrieben wird.

5. Laserbearbeitungsverfahren nach einem der vorhergehenden Ansprüche, **dadurch gekennzeichnet, dass** Mittel zur Fokussierung des Laserbündels vorgesehen sind, die nicht oder nicht vollständig chromatisch kompensiert sind, so dass auf der Höhe des Brennpunkts ein Lichtfleck (20) für das Licht mit doppelter Frequenz erzielt wird, der einen Durchmesser aufweist, der kleiner ist als jener des Lichtflecks (22) für das Licht mit der anfänglichen Wellenlänge.

6. Laserbearbeitungsverfahren nach einem der vorhergehenden Ansprüche, **dadurch gekennzeichnet, dass** dieses Verfahren in einem Schweißen eines hochreflektierenden Metalls besteht.

7. Laserbearbeitungsverfahren nach Anspruch 6, **dadurch gekennzeichnet, dass** die Stärke des Lichts mit doppelter Frequenz in Kombination mit dem Licht mit der anfänglichen Frequenz in der Leistungsspitze oder im Impulsteil mit der maximalen Leistung in der anfänglichen Unterperiode höher ist als die Schmelzgrenze für diese Lichtkombination und für das geschweißte Metall.

8. Laserbearbeitungsverfahren nach Anspruch 7, **dadurch gekennzeichnet, dass** die Stärke des Lichts mit doppelter Frequenz im Brennpunkt größer als 0,1 MW/cm² ist.

9. Laserbearbeitungsverfahren nach Anspruch 7 oder 8, **dadurch gekennzeichnet, dass** die Stärke des Lichts mit der anfänglichen Wellenlänge in der Leistungsspitze oder im Impulsteil mit der maximalen Leistung während der anfänglichen Unterperiode geringer als ist die Schmelzgrenze für dieses Licht und für das geschweißte Metall.

10. Laserbearbeitungsverfahren nach Anspruch 9, **dadurch gekennzeichnet, dass** die Stärke des Lichts mit der anfänglichen Wellenlänge im Brennpunkt weniger als 10 MW/cm² beträgt.

11. Laserbearbeitungsverfahren nach einem der Ansprüche 6 bis 10, **dadurch gekennzeichnet, dass** das geschweißte Metall Kupfer, Gold, Silber, Aluminium oder eine Legierung ist, die eines dieser Metalle enthält.

12. Laserbearbeitungsverfahren nach einem der Ansprüche 6 bis 11, **dadurch gekennzeichnet, dass** die Laserimpulse eine abschließende Unterperiode (T3) umfassen, in der die Leistung gegen Null sinkt, um die Abkühlung der ausgeführten Schweißung zu optimieren.

13. Laserbearbeitungsanlage, umfassend:
- eine Quelle für kohärentes Licht (32; 80) die ein Laserbündel (34) mit einer anfänglichen Wellenlänge zwischen 700 nm und 1200 nm erzeugt;
- einen nichtlinearen Kristall (36; 92), um die Frequenz des Laserbündels teilweise zu verdoppeln;
- Mittel zum Steuern (38; 82) der Lichtquelle, die dafür ausgelegt sind, Laserimpulse (10) zu erzeugen;
**dadurch gekennzeichnet, dass** die Steuermittel dafür ausgelegt sind, die Laserimpulse mit einem über die Periode jedes Laserimpulses hinweg beobachteten Leistungsprofil zu bilden, das in einer anfänglichen Unterperiode (T1) eine Spitze mit maximaler Leistung oder einen Impulsteil mit einer maximalen Leistung aufweist und das in einer mittleren Unterperiode (T2), deren Dauer höher ist als jene der anfänglichen Unterperiode und die direkt auf die Letztgenannte folgt, eine Leistung aufweist, die über diese gesamte mittlere Unterperiode hinweg geringer ist als die maximale Leistung, dass diese Steuermittel derart ausgelegt sind, dass die maximale Leistung einen Wert aufweist, der wenigstens zwei Mal höher ist als die über die Laserimpulsperiode hinweg gemessene durchschnittliche Leistung, und dass die Zeit des Anstiegs bis zu der maximalen Leistung ab dem Beginn jedes Laserimpulses weniger als 0,3 Millisekunden (300 µs) beträgt.

14. Laserbearbeitungsanlage nach Anspruch 13, **dadurch gekennzeichnet, dass** die Quelle für kohärentes Licht diodengepumpt ist und in einem qcw-Modus betrieben wird.

15. Laserbearbeitungsanlage nach Anspruch 13 oder 14, **dadurch gekennzeichnet, dass** die Quelle für kohärentes Licht durch einen Faserlaser (80) gebildet wird.

16. Laserbearbeitungsanlage nach einem der Ansprüche 13 bis 15, **dadurch gekennzeichnet, dass** die Dauer der anfänglichen Unterperiode (T1) weniger als zwei Millisekunden (2 ms) beträgt.

17. Laserbearbeitungsanlage nach einem der Ansprüche 13 bis 16, **dadurch gekennzeichnet, dass** die Zeit des Anstiegs bis zu dieser maximalen Leistung weniger als 50 µs (0,05 ms) beträgt.

18. Laserbearbeitungsanlage nach einem der Ansprüche 13 bis 17, **dadurch gekennzeichnet, dass** sie optische Elemente zur Fokussierung des Laserbündels umfasst, die nicht oder nicht vollständig chromatisch kompensiert sind, so dass auf der Höhe des Brennpunkts ein Lichtfleck (20) für das Licht mit doppelter Frequenz erzielt wird, der einen Durchmesser aufweist, der kleiner ist als jener des Lichtflecks (22) für das Licht mit der anfänglichen Wellenlänge.

19. Laserbearbeitungsanlage nach einem der Ansprüche 13 bis 18, **dadurch gekennzeichnet, dass** sie eine Anlage zum Schweißen von hochreflektierenden Metallen definiert.

20. Laserbearbeitungsanlage nach Anspruch 19, **dadurch gekennzeichnet, dass** die Stärke des Lichts mit doppelter Frequenz im Brennpunkt höher als 0,1 MW/cm² ist.

21. Laserbearbeitungsanlage nach Anspruch 19 oder 20, **dadurch gekennzeichnet, dass** die Stärke des Lichts mit der anfänglichen Wellenlänge im Brennpunkt weniger als 10 MW/cm² beträgt.

22. Laserbearbeitungsanlage nach einem der Ansprüche 19 bis 21, **dadurch gekennzeichnet, dass** die Steuermittel dafür ausgelegt sind, die Laserimpulse mit einem Leistungsprofil zu bilden, das eine abschließende Unterperiode (T3) umfasst, während der die Leistung gegen Null sinkt, um eine optimale Abkühlung der ausgeführten Schweißung zu gewährleisten.

23. Laserbearbeitungsanlage nach einem der Ansprüche 13 bis 22, **dadurch gekennzeichnet, dass** sie einen Sensor (94) zum Messen der Stärke des Lichts mit doppelter Frequenz umfasst, wobei dieser Sensor mit den Steuermitteln verbunden ist, um das Profil der Laserimpulse in Abhängigkeit von der Messung der Stärke des Lichts mit doppelter Frequenz in Echtzeit zu variieren.

24. Laserbearbeitungsanlage nach einem der Ansprüche 13 bis 23, **dadurch gekennzeichnet, dass** sie einen Sensor (100) umfasst, um die Temperatur der Oberfläche des bearbeiteten Metalls im Einfallsbereich des Laserbündels zu messen oder um das Licht zu messen, das von dieser Oberfläche reflektiert wird, wobei dieser Sensor mit den Steuermitteln verbunden ist, um das Profil der Laserimpulse in Abhängigkeit von der Messung dieser Temperatur oder dieses reflektierten Lichts in Echtzeit zu variieren.

25. Laserbearbeitungsanlage nach einem der Ansprüche 13 bis 24, **dadurch gekennzeichnet, dass** die Steuermittel derart ausgebildet sind, dass die Zeit des Anstiegs bis zur maximalen Leistung wesentlich weniger als 0,1 ms (100 µs) beträgt.

26. Laserbearbeitungsanlage nach Anspruch 19, **dadurch gekennzeichnet, dass** die Stärke des Lichts mit doppelter Frequenz im Brennpunkt größer als 1,0 MW/cm² ist.

27. Laserbearbeitungsverfahren nach einem der Ansprüche 1 bis 12, **dadurch gekennzeichnet, dass** die Variation der Leistung jedes Laserimpulses derart ausgeführt wird, dass die Zeit des Anstiegs bis zur maximalen Leistung wesentlich weniger als 0,1 ms (100 µs) beträgt.

28. Laserbearbeitungsverfahren nach Anspruch 7, **dadurch gekennzeichnet, dass** die Stärke des Lichts mit doppelter Frequenz im Brennpunkt größer als 1,0 MW/cm² ist.

## Claims

1. Laser machining method, comprising the following steps:
A) generating at least one laser source (30; 80, 82) of a laser beam having an initial wavelength of between 700nm and 1200nm and formed from a succession of laser pulses (10);
B) doubling the frequency of a part (12) of said laser beam by means of a non-linear crystal;
**characterised by** a step consisting of
C) varying the luminous power emitted during each laser pulse in such a way that the power profile for said initial wavelength on the period of this laser pulse has, in an initial sub-period (T1), a maximum power peak or a pulse part with maximum power and, in an intermediary sub-period (T2) of duration greater than the initial sub-period and following the latter, has inferior power compared to said maximum power over all of this intermediary sub-period, wherein this maximum power has a value of at least twice as great as the average power over the laser pulse period and the time for rising to said maximum power from the start of each laser pulse is less than 0.3 milliseconds (300µs).

2. Laser machining method according to claim 1, **characterised in that** the duration of said initial sub-period (T1) is less than 2ms.

3. Laser machining method according to claim 1 or 2, **characterised in that** said variation of the power of each laser pulse is carried out in such a way that said time for rising to said maximum power is less than 0.05ms (50µs).

4. Laser machining method according to one of the preceding claims, **characterised in that** said maximum power is greater than 200W, wherein said laser source functions in a qcw mode.

5. Laser machining method according to one of the preceding claims, **characterised in that** focusing means of said laser beam, which are not at all or not entirely compensated for chromatically, are provided so as to obtain a light spot (20) at the level of the focal point for the dual-frequency light, which has a smaller diameter than that of the light spot (22) for the light at the initial wavelength.

6. Laser machining method according to one of the preceding claims, **characterised in that** the method consists of welding a highly reflective metal.

7. Laser machining method according to claim 6, **characterised in that** the dual-frequency light, in combination with the initial-frequency light in the power peak or the pulse part with maximum power, is greater than the threshold of fusion, in the initial sub-period, for this light combination and for the welded material.

8. Laser machining method according to claim 7, **characterised in that** said dual-frequency light intensity is greater than 0.1MW/cm² at the focal point.

9. Laser machining method according to claim 7 or 8, **characterised in that** the light intensity at the initial wavelength in the power peak or the pulse part with maximum power is less, in the initial sub-period, than the threshold of fusion for this light and for the welded metal.

10. Laser machining method according to claim 9, **characterised in that** said light intensity at the initial wavelength is less than 10MW/cm² at the focal point.

11. Laser machining method according to one of claims 6 to 10, **characterised in that** said welded metal is copper, gold, silver, aluminium or an alloy containing one of these metals.

12. Laser machining method according to one of claims 6 to 11, **characterised in that** said laser pulses have an end sub-period (T3), in which the power decreases towards zero so as to optimise the cooling of the weld that was carried out.

13. Laser machining installation, comprising:
- a coherent light source (32; 80) generating a laser beam (34) having an initial wavelength of between 700nm and 1200nm;
- a non-linear crystal (36; 92) to partially double the frequency of said laser beam;
- control means (38; 82) of said light source, structured in such a way as to cause laser pulses (10);
**characterised in that** said control means are structured so as to form said laser pulses with a power profile on the period of each laser pulse having, in an initial sub-period (T1), a maximum power peak or a pulse part with maximum power and, in an intermediary sub-period (T2) of duration greater than the initial sub-period and directly following the latter, having inferior power compared to said maximum power throughout all of this intermediary sub-period, **in that** these control means are structured in such a way that said maximum power has a value that is at least twice as great as the average power on the laser pulse period and that the time for rising to said maximum power from the start of each laser pulse is less than 0.3 milliseconds (300µs).

14. Laser machining installation according to claim 13, **characterised in that** said coherent light source is equipped with diodes and functions in a qcw mode.

15. Laser machining installation according to claim 13 or 14, **characterised in that** said coherent light source is formed by a fibre laser (80).

16. Laser machining installation according to one of claims 13 to 15, **characterised in that** the duration of said initial sub-period (T1) is less than two milliseconds (2ms).

17. Laser machining installation according to one of claims 13 to 16, **characterised in that** said rise time is less than 50µs (0.05ms).

18. Laser machining installation according to one of claims 13 to 17, **characterised in that** it comprises optical focusing elements of said laser beam, which are not at all or not entirely compensated for chromatically so as to obtain a light spot (20) at the level of the focal point for the dual-frequency light, which has a smaller diameter than that of the light spot (22) for the light at the initial wavelength.

19. Laser machining installation according to one of claims 13 to 18, **characterised in that** it defines an installation for welding highly reflective metals.

20. Laser machining installation according to claim 19, **characterised in that** the dual-frequency light intensity is greater than 0.1MW/cm² at the focal point.

21. Laser machining installation according to claim 19 or 20, **characterised in that** the light intensity at the initial wavelength is less than 10MW/cm² at the focal point.

22. Laser machining installation according to one of claims 19 to 21, **characterised in that** said control means are structured so as to form said laser pulses with a power profile having an end sub-period (T3), during which the power decreases towards zero so as ensure optimal cooling of the welding carried out.

23. Laser machining installation according to one of claims 13 to 22, **characterised in that** it comprises a sensor (94) for measuring the dual-frequency light power, wherein this sensor is connected to said control means in order to vary, in real time, the profile of said laser pulses according to the measurement of this dual-frequency light power.

24. Laser machining installation according to one of claims 13 to 23, **characterised in that** it comprises a sensor (100) for measuring the temperature of the surface of the material processed in the impact zone of the laser beam or for measuring the light reflected by this surface, wherein this sensor is connected to said control means in order to vary, in real time, the profile of said laser pulses according to the measurement of this temperature or this reflected light.

25. Laser machining installation according to one of claims 13 to 24, **characterised in that** said control means are structured in such a way that said rise time to said maximum power is sensitively lower than 0.1ms (100µs).

26. Laser machining installation according to claim 19, **characterised in that** the dual-frequency light intensity is greater than 1.0MW/cm² at the focal point.

27. Laser machining method according to any one of claims 1 to 12, **characterised in that** said variation of the power of each laser pulse is carried out in such a way that said rise time to said maximum power is sensitively lower than 0.1ms (100µs).

28. Laser machining method according to claim 7, **characterised in that** said dual-frequency light intensity is greater than 1.0MW/cm² at the focal point.
